# EUROPEAN PATENT SPECIFICATION

(11) **EP 2 223 816 B1**
(45) Date of publication and mention of the grant of the patent: **13.04.2011**
(21) Application number: 09013378.6
(22) Date of filing: 22.10.2009
(51) Int. Cl.: B60H 1/32

(54) **Air conditioner for a vehicle**
Klimaanlage für ein Fahrzeug
Climatiseur pour véhicule

(30) Priority: 26.02.2009 KR 20090016491
(43) Date of publication of application: 01.09.2010
(73) Proprietor: Halla Climate Control Corporation, Daejeon-si 306-230 (KR)
(72) Inventor: Kim, Young Chul, Daejeon 306-230 (KR); Park, Tae Yong, Daejeon 306-230 (KR)
(74) Representative: Laufhütte, Dieter

(56) References cited:
- EP-A2- 1 762 407
- FR-A1- 2 761 013
- JP-A- 2003 048 423
- US-A- 4 664 551
- US-B1- 6 422 301

## Description

### CROSS-REFERENCE(S) TO RELATED APPLICATIONS

The present invention claims priority of Korean Patent Application No. 10-2009-0016491, filed on February 26, 2009, which is incorporated herein by reference.

### BACKGROUND OF THE INVENTION

### Field of the Invention

The present invention relates to an air conditioner for a vehicle, and more particularly, to an air conditioner for a vehicle, which has an improved condensate discharging structure so as to prevent condensate from being leaked through a divided surface of a left and right divided type air conditioning case.

### Description of Related Art

In a heating ventilating and air conditioning (HVAC) system for controlling internal air of a vehicle, refrigerant is compressed by using a vehicle power system and condensed by external air and then rapidly expanded and evaporated, and the internal air may be ventilated to an evaporator and cooled by heat exchange at the evaporator when the refrigerant is evaporated, thereby obtaining cooled air, and also the internal air may be ventilated to a heater core and heated by heat exchange at the heater core using cooling water heated by an vehicle engine, thereby obtaining warm air.

Generally, a (three-piece type) air conditioning case for a vehicle includes a left case, a right case and a lower case.

According to an air ventilation process in the air conditioning case, external air is introduced into the air-conditioning case using a blower (not shown) and then passed through an evaporator. Since the evaporator is maintained at a lower temperature than an ambient temperature in a cooling mode, condensate is generated on a surface of the evaporator due to a low saturated vapor pressure.

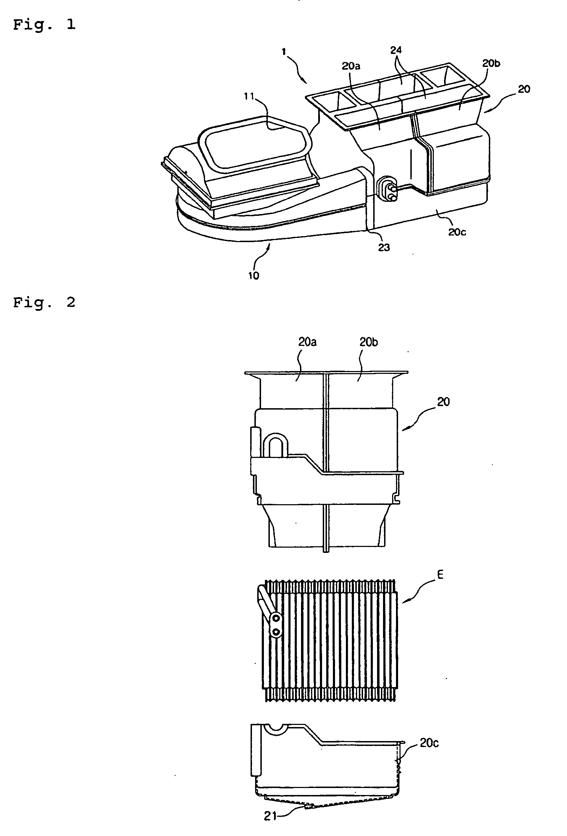

Fig. 1 is a perspective view showing a conventional semi center type air conditioner 1. The air conditioner 1 includes an air conditioning case 20 in which an air inlet port 23 is formed at an air entering side thereof and a plurality of air outlet ports 24 are formed at an air discharging side thereof, and a ventilator unit 10 which selectively introduces internal or external air through an internal and external air inlet port 11 formed at an upper side thereof and then forcibly ventilates the introduced air into the air inlet port 23.

As shown in Fig. 2, an evaporator E and a heater core (not shown) are disposed in turn in the air conditioning case 20, and also a temperature controlling door (not shown) for controlling temperature and a mode door (not shown) for performing various air conditioning modes are provided at the air conditioning case 20.

In the air conditioner 1, the air ventilated into the air conditioning case 20 by the ventilator unit 10 is passed through the evaporator E and then cooled or heated during an air conditioning process that selectively passes through the heater core by the temperature controlling door. The cooled or heated air is supplied into the vehicle through each duct connected with the plurality of air outlet ports 24, thereby obtaining a desired air conditioning effect.

Meanwhile, when the air conditioning system is operated, since cooled refrigerant is circulated in the evaporator E, condensate is generated around the evaporator E during a heat exchange process with the external air.

The condensate is flowed down along the evaporator E or dropped to a lower side of the air conditioning case 20 by the ventilated air, and then discharged to an outside through a condensate discharging port 21 formed at a lower side of the air conditioning case 20.

Typically, the air conditioning case 20 is comprised of an upper case 20a, 20b, and an integral lower case 20c for preventing a leakage of the condensate. As shown in Figs. 1 and 2, the evaporator E is arranged between the upper case 20a, 20b and the lower case 20c. The upper case 20a, 20b is comprised of a left case 20a and a right case 20b.

The conventional air conditioning case 20 has following problems.

Since the lower case 20c is separately provided at the conventional air conditioning case 20 so as to prevent the leakage of the condensate generated at the evaporator E, a manufacturing cost is increased.

Further, since separate coupling means is required to couple the lower case 20c to the upper case having the left and right cases 20a and 20b, work effort is increased and work efficiency is deteriorated. FR 2761013 discloses an air conditioner according to the preamble of appending claim 1.

### SUMMARY OF THE INVENTION

An embodiment of the present invention is directed to providing an air conditioning case having a left case and a right case, which efficiently prevents a leakage of condensate without a sealing member which is interposed between divided surfaces of the conventional air conditioning case, thereby reducing the number of components and the work effort.

To achieve the object of the present invention, the present invention provides an air conditioner for a vehicle, comprising an air conditioning case which is comprised of a first case and a second case; and an evaporator E which is installed in an inner space of the air conditioning case, wherein the first case comprises (a) a main drain passage which is provided with (1) a first side wall which is protruded to a lower side of the bottom surface of the first case, (2) a first bottom wall which is connected with the first side wall and (3) a first partition wall which is spaced apart from the first side wall, protruded to an upper side of the second bottom wall and bonded to the first partition wall, and (b) a first condensate discharging passage which is formed to be communicated with the main drain passage, and the second case comprises (a) a sub-drain passage which is provided with (1) a second side wall which is protruded to the lower side of the bottom surface of the second case, (2) a second bottom wall which is connected with the second side wall and (3) a second partition wall which is spaced apart from the second side wall and protruded to an upper side of the second bottom wall, and (b) a second condensate discharging passage which is formed to be communicated with the sub-drain passage, and a condensate discharging port is formed at a bottom surface of the first case and/or a bottom surface of the second case so as to guide condensate generated from the evaporator E to the main drain passage and/or the sub-drain passage.

A bent portion is formed at one of the first and second partition walls so as to cover an upper surface of the other partition wall. Preferably, a length L of the bent portion is formed to be larger than a sum 1 of thicknesses of the first and second partition walls.

Preferably, upper ends of the first and second partition wall are contacted with each other and bent toward the sub-drain passage.

Preferably, an upper end of the first partition wall is formed to be more protruded upward than an upper end of the second partition wall.

Preferably, the condensate discharging port is formed by inwardly concaving a part of a joint portion of the bottom surface of the first or second case.

Preferably, the condensate discharging port and 600b is provided in plural along the joint portion of the bottom surface of the first or second case so as to smoothly discharge the condensate even when the air conditioning case is inclined during movement of a vehicle.

Preferably, a center portion of the condensate discharging port is spaced apart in a predetermined distance D from the bonded surface of the first and second partition walls toward the main drain passage.

Preferably, the main and sub-drain passages 200 and 300 are downwardly inclined toward the first and second condensate discharging passage.

Preferably, the first and second condensate discharging passages are formed as semi-divided bodies so as to form a single drain pipe after they are coupled with each other.

Preferably, a partition is formed at the joint portion of the first and second condensate discharging passages so as to partition each of the main and sub-drain passages.

Preferably, a first groove is formed at a lower side of one of the first or second bottom wall and a first protrusion that is inserted into the first groove is also formed at a lower side of the other bottom wall.

Preferably, second and third grooves are formed at the bottom surface of one of the first and second cases, and second and third protrusions which are respectively inserted into the second and third grooves are formed at the bottom surface of the other case.

Further, the present invention provides an air conditioner for a vehicle, comprising an air conditioning case which is comprised of a first case and a second case; and an evaporator E which is installed in an inner space of the air conditioning case, wherein a condensate discharging port is formed at a bottom surface of the first or second case and a main drain passage and a sub-drain passage that are communicated with an inner space of the air conditioning case, in which the evaporator E is installed, and partitioned by a partition wall are formed so as to guide condensate discharged through the condensate discharging port to an outside, and a center portion of the condensate discharging port is spaced apart in a predetermined distance D from a center line of the partition wall.

Preferably, the partition wall is comprised of a first partition wall of the main drain passage and a second partition wall of the sub-drain passage and one of the first and the second partition wall has a bent portion so as to cover an upper surface of the other partition wall.

Preferably, the main drain passage and the sub-drain passage are formed to be respectively communicated with the first and second condensate discharging passage so that the condensate is discharged to an outside of the air conditioning case.

Preferably, a partition is formed at a joint portion of the first and second condensate discharging passages so as to partition the main drain passage and the sub-drain passage.

### BRIEF DESCRIPTION OF THE DRAWINGS

Fig. 1 is a perspective view showing a conventional semi center type air conditioner.

Fig. 2 is a perspective view showing main components of the conventional air conditioner of Fig. 1.

Fig. 3 is a perspective view showing an air conditioning case having a condensate discharging passage in accordance with the present invention.

Fig. 4 is a partial perspective view showing the air conditioning case in accordance with the present invention.

Fig. 5 is a perspective view showing divided first and second cases in accordance with the present invention.

Fig. 6 is a perspective view showing other divided first and second cases in accordance with the present invention.

Fig. 7 is a partially cut away perspective view showing main and sub-drain passages in accordance with the present invention.

Fig. 8 is a cut away perspective view showing the main and sub-drain passages in accordance with the present invention.

Fig. 9 is a cross-sectional view showing the main and sub-drain passages in accordance with the present invention.

Fig. 10 is a cross-sectional view showing other main and sub-drain passages in accordance with the present invention.

Fig. 11 is a left side view showing the first case in accordance with the present invention.

Fig. 12 is a left side view showing another first case in accordance with the present invention.

Fig. 13 is a partial perspective view showing a flow of condensate in case that the air conditioning case is rotated to the right side in accordance with the second embodiment of the present invention.

Fig. 14 is a partial perspective view showing a flow of condensate in case that the air conditioning case is rotated to the left side in accordance with the second embodiment of the present invention.

Fig. 15 is a perspective view showing first and second condensate discharging passage in accordance with the second embodiment of the present invention.

### [Detailed Description of Main Elements]

| | | | |
|---|---|---|---|
| 1000: | air conditioning case | 1000a: | first case |
| 1000b: | second case | 200, 300: | drain passage |
| 400, 500: | condensate discharging passage | | |
| 210, 310: | side wall | 220, 320: | bottom wall |
| 230, 330: | partition wall | 231: | bent portion |
| 331: | upper end surface | | |

### DESCRIPTION OF SPECIFIC EMBODIMENTS

The present invention relates to an air conditioner for a vehicle, which has an improved condensate discharging structure so as to prevent condensate from being leaked through a divided surface of a left and right divided type air conditioning case. To this end, a condensate discharging port is formed at a bottom surface of a first or second case, and a drain passage is formed at the bottom surface so that the condensate flowed along the condensate port is flowed through the condensate discharging passage without a leakage problem, and the drain passage is formed as a divided passage by protruding a partition wall from a lower side thereof to an upper side. The advantages, features and aspects of the invention will become apparent from the following description of the embodiments with reference to the accompanying drawings, which is set forth hereinafter.

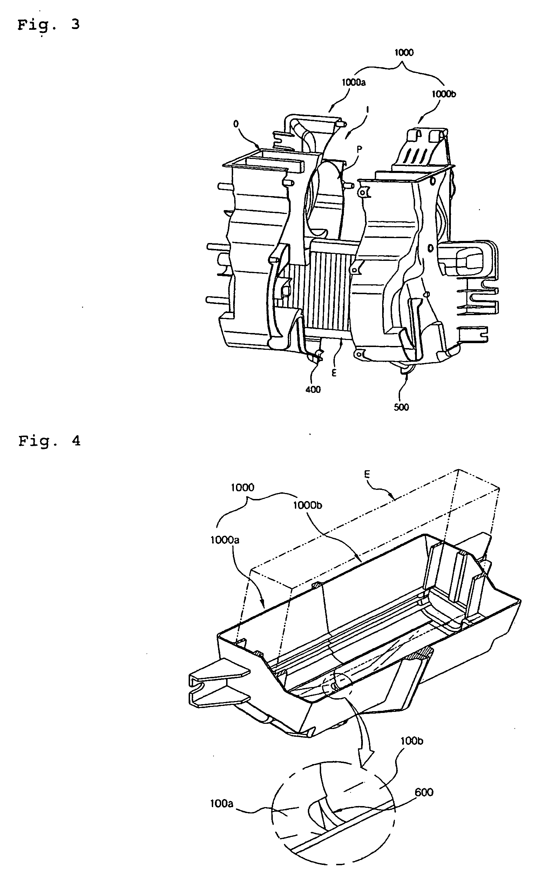

Fig. 3 is a perspective view showing a state before first and second cases 1000a and 1000b of a vehicle air conditioner are coupled to each other, wherein the air conditioner includes an air conditioning case 1000 which is formed by the first and second cases 1000a and 1000b, an evaporator E which disposed in the air conditioning case 1000, and an air inlet port I, an air passage P and an air discharging passage O which are formed at the air conditioning case 1000. Referring to the drawing, a condensate discharging passage 400, 500 is separately formed at a lower side of the evaporator E. Fig. 4 is a partial perspective view showing a lower side of the air conditioning case of the present invention, wherein a condensate discharging portion 600 is formed at a bottom surface 100a of the first case 1000a. Although the condensate discharging portion 600 is formed at the bottom surface 100a of the first case 1000a, this is a just example, and the condensate discharging portion 600 may be formed at a bottom surface 100b of the second case 1000b or formed at both bottom surfaces 100a and 100b of the first and second cases 1000a and 1000b. The present invention is characterized by a coupling structure of the first and second cases 1000a and 1000b and a sectional shape thereof.

The first and second cases 1000a and 1000b are symmetrically coupled to each other. For example, in mutual contacting surfaces of the first and second cases 1000a and 1000b, if a groove is formed at one of the contacting surfaces, a protrusion corresponding to the groove is formed at the other contacting surface. Therefore, as showing in the drawings, although the groove is formed at the first case 1000a and the protrusion is formed at the second case 1000b, the present invention is not limited to the embodiment. In other words, the groove may be formed at the second case 1000b and the protrusion may be formed at the first case 1000a, and other various coupling structures may be also applied.

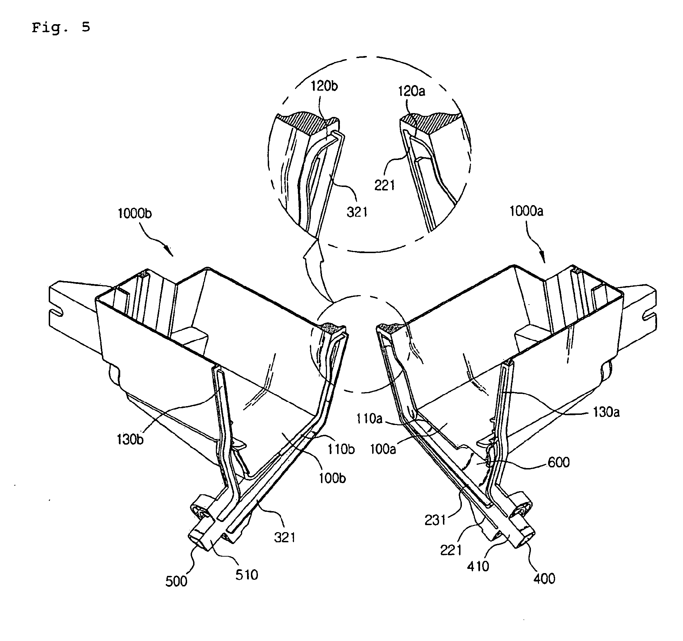

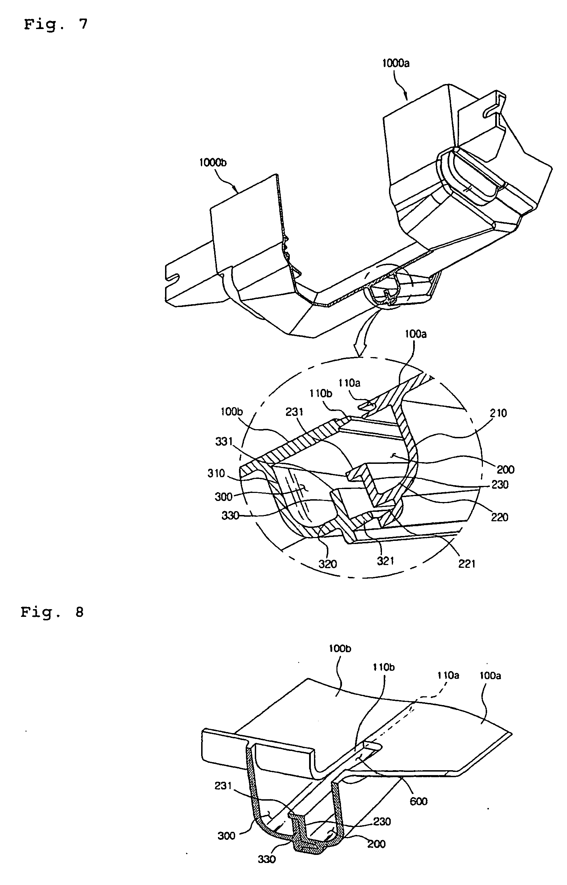

Referring to Figs. 5 and 7, a main drain passage 200 is formed at a lower side of the first case 1000a so that the condensate generated at the evaporator E and the like is introduced into the condensate outlet port 600. That is, at the lower side of the first case 1000a, there is formed the main drain passage 200 including a first side wall 210 which is protruded to a lower side of the bottom surface of the first case, a first bottom wall 220 which is connected with the first side wall 210 and a first partition wall 230 which is spaced apart from the first side wall 210 and protruded to an upper side of the first bottom wall 220. The condensate discharging port 600 may be formed by inwardly concaving a part of a joint portion 110a of the bottom surface 100a of the first case 1000a that is bonded with a joint portion 110b of the bottom surface 100b of the second case 1000b (referring to Figs. 5 and 8).

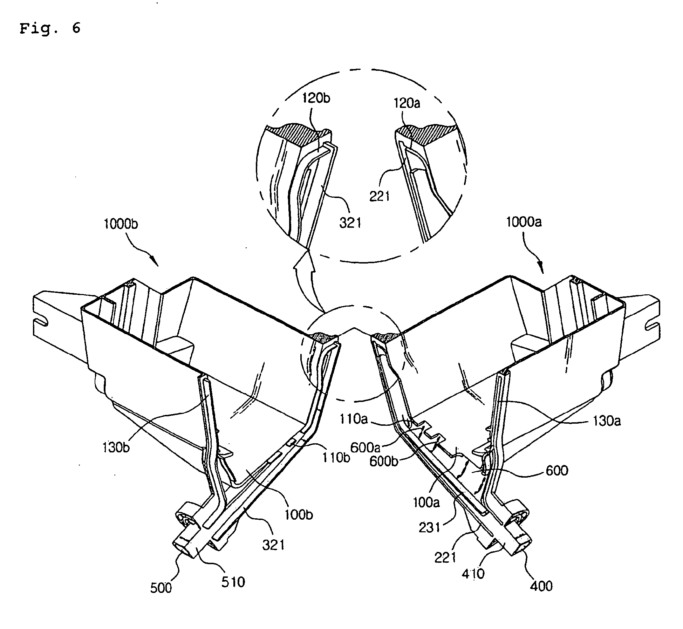

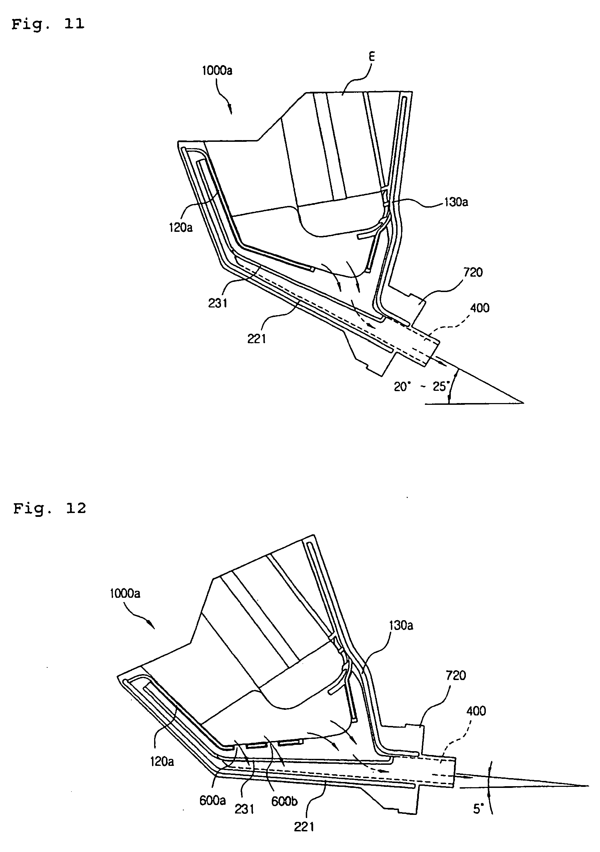

As shown in Figs. 6 and 12, the condensate discharging port 600, 600a and 600b may be provided in plural at the bottom surface 100a of the first case 1000a or the bottom surface loob of the second case 1000b in order to smoothly discharge the condensate even when the air conditioning case 1000 is inclined during movement of the vehicle. The plurality of condensate discharging ports 600, 600a and 600b may be formed at one of the joint portions 110a and 110b or both of them and a shape thereof is not limited especially. When the vehicle travels along a sloped road or a curved road, the air conditioning case 1000 is also inclined behind and front or right and left. In order to prevent the condensate from being stayed in the air conditioning case 1000, particularly when the air conditioning case is inclined behind, the plurality of condensate discharging ports 600, 600a and 600b are provided along the joint portion 110a or 110b of the bottom surface of the first or second case 1000a or 1000b (referring to Figs. 6 and 11).

With regard to the main drain passage 200, the description thereof including the first side wall 210, first bottom wall 220 and the first partition wall 230 is just provided for the sake of understanding the present invention. The drain passage may have various shapes, e.g., a rectangular or circular shape in section, which is formed to be protruded to a lower side of the bottom surface 100a so that the condensate dropped from the condensate discharging portion 600 is introduced to the first condensate discharging passage 400.

The condensate flowed along the main drain passage 200 is discharged to an outside through the first condensate discharging passage 400.

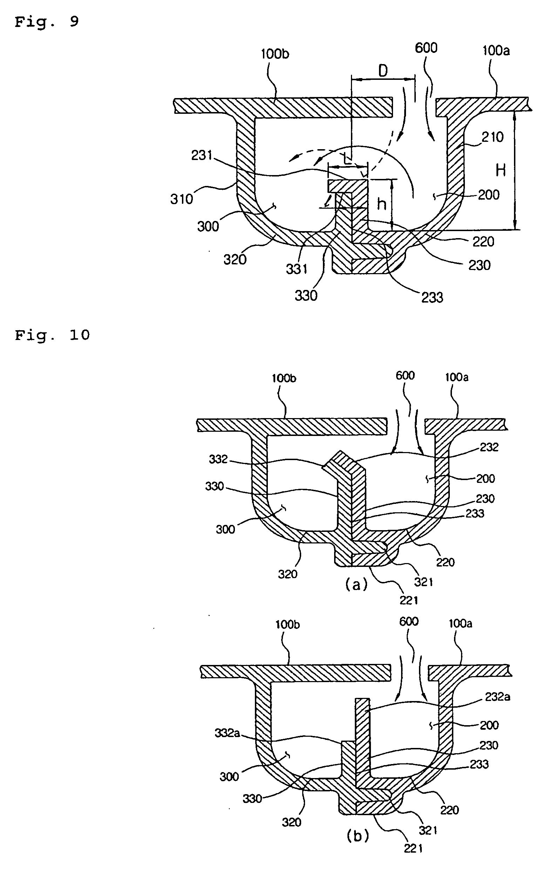

As shown in Fig. 9, a sub-drain passage 300 is formed at a lower side of the second case 1000b to be corresponding to the first case 1000a including the first partition wall 230 and the like, so that the condensate dropped from the condensate discharging portion 600 is introduced to the second condensate discharging passage 500, or the condensate overflowed from the main drain passage 210 is received therein and then discharged to the second condensate discharging passage 500. In other words, at the lower side of the second case 1000b, there is formed the sub-drain passage 300 including a second side wall 310 which is protruded to the lower side of the bottom surface 100b of the second case 1000b, a second bottom wall 320 which is connected with the second side wall 310 and a second partition wall 330 which is spaced apart from the second side wall 310 and protruded to an upper side of the second bottom wall 320.

The condensate flowed along the sub-drain passage 300 is discharged to an outside through the second condensate discharging passage 500.

As described above, the main drain passage 200 and the sub-drain passage 300 are respectively formed at the bottom surfaces 100a and 100b of the first and second cases 1000a and 1000b, and the first and second partition walls 230 and 330 allows them to be used as divided passages. Therefore, it is possible to prevent a leakage of the condensate due to the partition walls 230 and 330 which are respectively protruded to the upper side of the bottom surfaces 220 and 320 of the main and sub-drain passages 200 and 300 (referring to Figs. 3 to 7).

In case that the first and second case 1000a and 1000b are coupled to each other, the condensate dropped from the outer surface of the evaporator E is flowed along right, left and lower walls and finally flowed along the bottom surfaces 100a and 100b of the first and second cases 1000a and 1000b. Herein, even if the condensate flowed along the bottom surface of the air conditioning case is leaked through a gap between the joint portions 110a and 110b for jointing the bottom surfaces 100a and 100b of the air conditioning case, the condensate is dropped to the main drain passage 200 or the sub-drain passage 300 and then flowed to the first or second condensate discharging passage 400 or 500 without a leakage of the condensate.

Meanwhile, the condensate may be leaked through a gap formed at a bonded surface 233 (reference to Fig. 9) of the first and second partition walls 230 and 330. In order to prevent the leakage, as shown in Figs. 7 to 9, a bent portion 231 may be formed at one of the first and second partition walls 230 and 330 so as to cover an upper surface 331 of the other partition wall.

Alternatively, as shown in Fig. 10A, an upper end 232, 332 of the first or second partition wall 230, 330 may be formed to be inclined at a desired angle. In other words, the upper ends 232 and 332 of the first and second partition wall 230 and 330 may be bonded with each other to be bent toward the main drain passage 200 or the sub-drain passage 300, thereby preventing introduction of the condensate to the bonded surface 233. Otherwise, as shown in Fig. 10B, a height of the first partition wall 230 may be higher than that of the second partition wall 330 in order to prevent the introduction of the condensate to the bonded surface 233.

Referring to Figs. 5 to 7, in order to prevent the leakage of the condensate and facilely couple the first and second cases 1000a and 1000b when a gap is generated at the bonded surface of the first and second partition wall 230 and 330, a first groove 221 is formed at a lower side of one of the first or second bottom wall 220 or 320 and a first protrusion 321 is also formed at a lower side of the other bottom wall. Although not shown, a sealing member (not shown) may be inserted into the firs groove 221 for insertion of the first protrusion 321 so as to prevent the leakage of the condensate.

Hereinafter, a position of the condensate discharging port 600 will be described with reference to Fig. 9. A center portion of the condensate discharging port 600 is spaced apart from the bonded surface 233 in a desired distance D. Due to such structure, it is previously prevented that the condensate is directly dropped from the condensate discharging port 600 to the bonded surface 233. And due to such position of the condensate discharging port 600, it is prevented that the condensate is introduced into the bonded surface 233. The bent portion 231 may be formed at one of the first and second partition walls 230 and 330 so as to cover the upper surface 331 of the other partition wall. A length L of the bent portion 231 is formed to be larger than a sum 1 of thicknesses of the first and second partition wall 230 and 330, thereby preventing the introduction of the condensate into the bonded surface 233. Further, a height of the first and second partition walls 230 and 330 is lower than that of the main drain passage 200 and the sub-drain passage 300, and thus when the condensate is excessively introduced into the main drain passage 200, some of the condensate is introduced into the sub-drain passage 300. Due to such shape and structure of the first and second partition walls 230 and 330, the leakage of the condensate is prevented, and also in case that the condensate is excessively introduced into the main drain passage 200, the condensate is introduced into the sub-drain passage 300 formed at the lower side of the second case 1000b and then discharged to an outside of the air conditioning case through the second condensate discharging passage 500.

A slope is formed so that the main and sub-drain passages 200 and 300 are downwardly inclined toward the first and second condensate discharging passage 400 and 500. Referring to Fig. 11, preferably, the slope has an angle of 20 to 25° so that the condensate is facilely flowed from the main and sub-drain passages 200 and 300 to the first and second condensate discharging passage 400 and 500. Due to such slope, it is prevented that the condensate is discharged from the main and sub-drain passages 200 and 300 to the outside and also the condensate is stayed in the main and sub-drain passages 200 and 300 or flowed back into the air conditioning case 1000. In general, when a vehicle travels along a sloped road, an angle of inclination is not exceeded by 20°. Therefore, it is preferable that the slope has an angle of 20 to 25°. As described above, the condensate discharging port 600, 600a, 600b may be provided in plural at the bottom surface 100a of the first case 1000a or the bottom surface 100b of the second case 1000b in order to smoothly discharge the condensate even when the air conditioning case 1000 is inclined during the movement of the vehicle.

In relation to this, the inventor of the present invention has performed an experiment in a state that the air conditioning case 1000 is inclined behind and front or left and right at an angle of 20°, and then confirmed a fact that the condensate was not leaked. The experiment was performed in a state that a vehicle air conditioner was operated at a high/low air volume when an external environment shows a high/low percentage of humidity, respectively. And in order to clearly confirm whether the condensate was leaked or not, a water-soluble paint having an opaque color was coated on the bonded surface of the first and second cases formed of a transparent material. Particularly, it was confirmed that the condensate was not leaked in a bad conditioned traveling state (e.g., the vehicle is inclined behind or front at an angle of 20°, or right or left at an angle of 20°).

**Table 1 A result table showing whether the condensate is leaked in each traveling state**

| Traveling state of vehicle | Result |
|---|---|
| Left at an angle of 20° | Not leaked |
| Right at an angle of 20° | Not leaked |
| Front at an angle of 20° | Not leaked |
| Behind at an angle of 20° | Not leaked |
| Behind at an angle of 20° → front at an angle of 20° | Not leaked |
| Left at an angle of 20° → right at an angle of 20° | Not leaked |

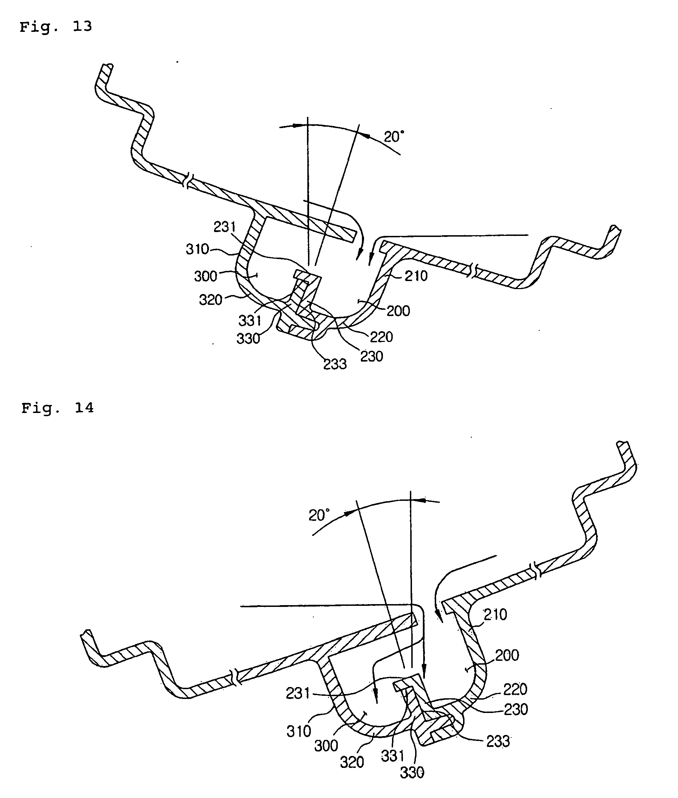

Fig. 12 shows a flowing direction of the condensate when the vehicle travels on a sloped road having an angle of 20°, and Fig. 13 shows a flowing direction of the condensate when the air conditioning case is rotated right while the vehicle travels on a curved road, and Fig. 14 shows a flowing direction of the condensate when the air conditioning case is rotated left while the vehicle travels on the curved road.

As shown in Fig. 12, since the plurality of condensate discharging ports 600, 600a, 600b are formed along the joint portion 110a, 110b of the first or second case 1000a, 1000b, the condensate is smoothly discharged when the vehicle travels on the sloped road. As shown in Fig. 13, most of the condensate is discharged through the main drain passage 200 when the air conditioning case 1000 is rotated right. As shown in Fig. 14, the condensate is discharged through the main drain passage 200 and the sub-drain passage 300 when the air conditioning case 1000 is rotated left. Herein, since the bent portion 231 is formed at one of the first and second partition walls 230 and 330 so as to cover the upper surface 331 of the other partition wall, it is prevented that the condensate sinks into the bonded surface 233 of the first and second partition walls 230 and 330.

Referring to Figs, 5 and 6, in order to help a linkage of the first and second cases 1000a and 1000b, second and third grooves 120a and 130a are formed at one of the first and second cases 1000a and 1000b along the bonded surface, and second and third protrusions 120b and 130b are formed at the other case.

Since the condensate discharging port 600 is formed at the first case 1000a, the second groove 120a is formed to be extended to an end side that the condensate discharging port 600 starts to be formed, and the second protrusion 120b is formed at the second case 1000b so as to be corresponding to the second groove 120a.

Preferably, the second groove 120a and the second protrusion 120b corresponding to the second groove 120a are formed in a desired height from the bottom surface 100a, 100b of the air conditioning case 1000. The desired height is one third of a height of the evaporator E. This is caused by that, even if the condensate is dropped to left and right side surfaces of the evaporator E, it is not apprehended due to a high dropping speed of the condensate that the condensate is leaked through a gap formed at the left and right side walls of the air conditioning case 1000.

Although not shown, in order to prepare for scattering of the condensate when the vehicle travels under bad conditions, the second and third grooves 120a and 130a corresponding to the second and third protrusions 120b and 130b may be formed to be extended to an end side of the first and second condensate discharging passages 400 and 500.

Referring to Fig. 12, when the first and second condensate discharging passages 400 and 500 are linked to each other, one end of a drain hose (not shown) is inserted into them, and the other end thereof is exposed to an outside of the vehicle. Figs. 5, 6 and 12 show an example in which the first and second condensate discharging passages 400 and 500 are formed as independent passages, wherein a partition 410, 510 is formed at the first and second condensate discharging passages 400 and 500 which are bonded to each other when the first and second cases 1000a and 1000b are coupled to each other. However, the first and second condensate discharging passages 400 and 500 may be formed as semi-divided bodies so as to form a single drain pipe before the condensate is discharged. That is, in order to form a single closed loop type tubal discharging passage, the partition 410, 510 may be omitted. A cross-section of each of the first and second condensate discharging passages 400 and 500 may be formed into a curved shape, of which one side surface is opened, so as to be formed as a closed tube after the coupling of them and communicated with each other.

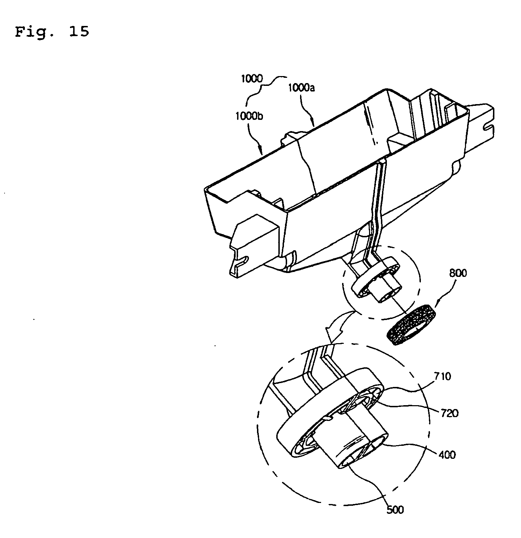

Before the drain hose (not shown) is inserted onto outer surfaces of the first and second condensate discharging passages 400 and 500 having the above-mentioned shape and structure, a dash panel (not shown) for partitioning an internal portion of the vehicle and an engine room is interposed. The first and second condensate discharging passages 400 and 500 pass through the dash panel (not shown). Therefore, when the condensate discharging passages 400 and 500 may be vibrated together with the dash panel contacted with the outer surfaces of the condensate discharging passages 400 and 500 due to vibration of the vehicle, the vibration may be amplified, or the condensate discharging passages 400 and 500 may be damaged. In order to buffer the vibration, as shown in Fig. 15, a joint portion 720 of a grommet 800, which is formed with a groove 710, is provided. The grommet 800 is inserted onto the outer surfaces of the condensate discharging passages 400 and 500 in order to buffer between the condensate discharging passages 400 and 500 and the dash panel (not shown).

According to the present invention, since a coupling structure of the left and right cases is improved, it is possible to prevent a leakage of the condensate that is occurred at the evaporator and also to drain the condensate to an outside without a separate lower case, thereby reducing the number of components and work effort for the lower case.

While the present invention has been described with respect to the specific embodiments, it will be apparent to those skilled in the art that various changes and modifications may be made without departing from the spirit and scope of the invention as defined in the following claims.

## Claims

1. An air conditioner for a vehicle, comprising:
an air conditioning case(1000) which is comprised of a first case(1000a) and a second case (1000b); and
an evaporator(E) which is installed in an inner space of the air conditioning case(1000),
wherein the first case(1000a) comprises (a) a main drain passage(200) which is provided with (1) a first side wall(210) which is protruded to a lower side of the bottom surface(100a) of the first case, (2) a first bottom wall(220) which is connected with the first side wall (210), and (b) a first condensate discharging passage(400) which is formed to be communicated with the main drain passage(200), and
the second case(1000b) comprises (a) a sub-drain passage (300) which is provided with (1) a second side wall(310) which is protruded to the lower side of the bottom surface (100b) of the second case, (2) a second bottom wall(320) which is connected with the second side wall(310), and (b) a second condensate discharging passage(500) which is formed to be communicated with the sub-drain passage(300), and
a condensate discharging port (600) is formed at a bottom surface (100a, 100b) of the first case and/or a bottom surface of the second case so as to guide condensate generated from the evaporator(E) to the main drain passage(200) and/or the sub-drain passage (300), **characterised in that** the first case (1000a) furthermore comprises (3) a first partition wall(230) which is spaced apart from the first side wall(210) and protruded to an upper side of the first bottom wall (220) and that the second case (1000b) furthermore comprises (3) a second partition wall(330) which is spaced apart from the second side wall(310), protruded to an upper side of the second bottom wall(320) and bonded to the first partition wall (230).

2. The air conditioner of claim 1, wherein a bent portion (231) is formed at one of the first and second partition walls(230, 330) so as to cover an upper surface(331) of the other partition wall.

3. The air conditioner of claim 2, wherein a length(L) of the bent portion (231) is formed to be larger than a sum of thicknesses of the first and second partition walls(230, 330).

4. The air conditioner of claim 1, wherein upper ends(232, 332) of the first and second partition wall(230, 330) are contacted with each other and bent toward the sub-drain passage(230) or an upper end(232a) of the first partition wall(230) is formed to be more protruded upward than an upper end(332a) of the second partition wall(330).

5. The air conditioner of claim 1, wherein the condensate discharging port (600) is formed by inwardly concaving a part of a joint portion of the bottom surface of the first or second case(1000a, 1000b).

6. The air conditioner of claim 5, wherein the condensate discharging port is provided in plural(600, 600a, 600b) along the joint portion (110a, 110b) of the bottom surface of the first or second case so as to smoothly discharge the condensate even when the air conditioning case(1000) is inclined during movement of a vehicle.

7. The air conditioner of claim 5, wherein a center portion of the condensate discharging port (500) is spaced apart in a predetermined distance(D) from the bonded surface(233) of the first and second partition walls(230, 330) toward the main drain passage(200).

8. The air conditioner of claim 1, wherein the main and sub-drain passages(200, 300) are downwardly inclined toward the first and second condensate discharging passage(400, 500).

9. The air conditioner of claim 8, wherein the first and second condensate discharging passages(400, 500) are formed as semi-divided bodies so as to form a single drain pipe after they are coupled with each other.

10. The air conditioner of claim 8, wherein a partition (410, 510) is formed at the joint portion of the first and second condensate discharging passages(400, 500) so as to partition each of the main and sub-drain passages(200, 300).

11. The air conditioner of claim 1, wherein a first groove (221) is formed at a lower side of one of the first or second bottom wall(220, 320), and a first protrusion (321) that is inserted into the first groove (221) is also formed at a lower side of the other bottom wall.

12. The air conditioner of claim 11, wherein second and third grooves (120a, 130a) are formed at the bottom surface(100a, 100b) of one of the first and second cases(1000a, 1000b), and second and third protrusions (120b, 130b) which are respectively inserted into the second and third grooves are formed at the bottom surface of the other case.

## Patentansprüche

1. Klimaanlage für ein Fahrzeug, welche umfasst:
ein Klimaanlagengehäuse (1000), das aus einem ersten Gehäuse (1000a) und einem zweiten Gehäuse (1000b) besteht; und
einen Verdampfer (E), der in einem Innenraum des Klimaanlagengehäuses (1000) eingebaut ist,
wobei das erste Gehäuse (1000a) umfasst: (a) einen Hauptablaufkanal (200), der mit (1) einer ersten Seitenwand (210), die zu einer unteren Seite der Bodenfläche (100a) des ersten Gehäuses ragt, (2) einer ersten Bodenwand (220), die mit der ersten Seitenwand (210) verbunden ist, versehen ist, und (b) einen ersten Kondensatablasskanal (400), der ausgebildet ist, um mit dem Hauptablaufkanal (200) zu kommunizieren, und
wobei das zweite Gehäuse (1000b) umfasst: (a) einen Unterablaufkanal (300), der mit (1) einer zweiten Seitenwand (310), die zu der unteren Seite der Bodenfläche (100b) des zweiten Gehäuses ragt, (2) einer zweiten Bodenwand (320), die mit der zweiten Seitenwand (310) verbunden ist, versehen ist, und (b) einen zweiten Kondensatablasskanal (500), der ausgebildet ist, um mit dem Unterablaufkanal (300) zu kommunizieren, und
wobei eine Kondensatablassöffnung (600) an einer Bodenfläche (100a, 100b) des ersten Gehäuses und/oder einer Bodenfläche des zweiten Gehäuses ausgebildet ist, um von dem Verdampfer (E) erzeugtes Kondensat zu dem Hauptablaufkanal (200) und/oder dem Unterablaufkanal (300) zu leiten, **dadurch gekennzeichnet, dass** das erste Gehäuse (1000a) weiterhin (3) eine erste Trennwand (230) umfasst, die von der ersten Seitenwand (210) beabstandet ist und zu einer oberen Seite der ersten Bodenwand (220) ragt, und dass das zweite Gehäuse (1000b) weiterhin (3) eine zweite Trennwand (330) umfasst, die von der zweiten Seitenwand (310) beabstandet ist, zu einer oberen Seite der zweiten Bodenwand (320) ragt und mit der ersten Trennwand (230) verbunden ist.

2. Klimaanlage nach Anspruch 1, **dadurch gekennzeichnet, dass** ein gebogener Abschnitt (231) an einer von erster und zweiter Trennwand (230, 330) ausgebildet ist, um eine obere Fläche (331) der anderen Trennwand zu bedecken.

3. Klimaanlage nach Anspruch 2, **dadurch gekennzeichnet, dass** eine Länge (L) des gebogenen Abschnitts (231) größer als eine Summe von Dicken der ersten und zweiten Trennwand (230, 330) ausgebildet ist.

4. Klimaanlage nach Anspruch 1, **dadurch gekennzeichnet, dass** obere Enden (232, 332) der ersten und zweiten Trennwand (230, 330) miteinander in Kontakt stehen und hin zu dem Unterablaufkanal (230) gebogen sind oder ein oberes Ende (232a) der ersten Trennwand (230) so ausgebildet ist, dass es weiter nach oben ragt als ein oberes Ende (332a) der zweiten Trennwand (330).

5. Klimaanlage nach Anspruch 1, **dadurch gekennzeichnet, dass** die Kondensatablassöffnung (600) durch ein Einwärtswölben eines Teils eines Verbindungsabschnitts der Bodenfläche des ersten oder zweiten Gehäuses (1000a, 1000b) gebildet ist.

6. Klimaanlage nach Anspruch 5, **dadurch gekennzeichnet, dass** die Kondensatablassöffnung entlang des Verbindungsabschnitts (110a, 110b) der Bodenfläche des ersten oder zweiten Gehäuses mehrfach (600, 600a, 600b) vorgesehen ist, um das Kondensat gleichmäßig abzulassen, selbst wenn das Klimaanlagengehäuse (1000) während Bewegung eines Fahrzeugs geneigt ist.

7. Klimaanlage nach Anspruch 5, **dadurch gekennzeichnet, dass** ein mittlerer Abschnitt der Kondensatablassöffnung (500) von der verbundenen Fläche (233) der ersten und zweiten Trennwand (230, 330) bei einem vorbestimmten Abstand (D) hin zu dem Hauptablaufkanal (200) beabstandet ist.

8. Klimaanlage nach Anspruch 1, **dadurch gekennzeichnet, dass** der Haupt- und der Unterablaufkanal (200, 300) nach unten hin zu dem ersten und zweiten Kondensatablasskanal (400, 500) geneigt sind.

9. Klimaanlage nach Anspruch 8, **dadurch gekennzeichnet, dass** der erste und der zweite Kondensatablasskanal (400, 500) als halb geteilte Körper ausgebildet sind, um nach dem Miteinanderverbinden ein einziges Ablaufrohr zu bilden.

10. Klimaanlage nach Anspruch 8, **dadurch gekennzeichnet, dass** eine Abtrennung (410, 510) an dem Verbindungsabschnitt des ersten und des zweiten Kondensatablasskanals (400, 500) ausgebildet ist, um jeden von Haupt- und Unterablaufkanal (200, 300) abzuteilen.

11. Klimaanlage nach Anspruch 1, **dadurch gekennzeichnet, dass** eine erste Nut (221) an einer unteren Seite eines von erster oder zweiter Bodenwand (220, 320) ausgebildet ist und ein erster Vorsprung (321), der in die erste Nut (221) eingeführt ist, ebenfalls an einer unteren Seite der anderen Bodenwand ausgebildet ist.

12. Klimaanlage nach Anspruch 11, **dadurch gekennzeichnet, dass** an der Bodenfläche (100a, 100b) eines von erstem und zweitem Gehäuse (1000a, 1000b) zweite und dritte Nuten (120a, 130a) ausgebildet sind und an der Bodenfläche des anderen Gehäuses zweite und dritte Vorsprünge (120b, 130b), die jeweils in die zweiten und dritten Nuten eingesetzt sind, ausgebildet sind.

## Revendications

1. Climatiseur pour un véhicule, comprenant:
un boîtier de conditionnement d'air (1000) qui est constitué d'un premier boîtier (1000a) et d'un deuxième boîtier (1000b); et
un évaporateur (E) qui est installé dans un espace intérieur du boîtier de conditionnement d'air (1000),
où le premier boîtier (1000a) comprend (a) un passage de drainage principal (200) qui présente (1) une première paroi latérale (210) qui fait saillie vers un côté inférieur de la surface de fond (100a) du premier boîtier, (2) une première paroi de fond (220) qui est reliée à la première paroi latérale (210), et (b) un premier passage d'évacuation de condensat (400) qui est formé pour communiquer avec le passage de drainage principal (200), et
le deuxième boîtier (1000b) comprend (a) un passage de sous-drainage (300) qui présente (1) une deuxième paroi latérale (310) qui fait saillie vers le côté inférieur de la surface de fond (100b) du deuxième boîtier, (2) une deuxième paroi de fond (320) qui est reliée à la deuxième paroi latérale (310), et (b) un deuxième passage de décharge de condensat (500) qui est formé pour communiquer avec le passage de sous-drainage (300), et
un orifice d'évacuation de condensat (600) est formé à une surface inférieure (100a, 100b) du premier boîtier et/ou une surface inférieure du deuxième boîtier de manière à guider le condensat produit par l'évaporateur (E) au passage de drainage principal (200) et/ou au passage de sous-drainage (300), **caractérisé en ce que** le premier boîtier (1000a) comprend en outre (3) une première paroi de séparation (230) qui est espacée de la première paroi latérale (210) et qui fait saillie vers un côté supérieur de la première paroi inférieure (220), et **en ce que** le deuxième boîtier (1000b) comprend en outre (3) une deuxième paroi de séparation (330) qui est espacée de la deuxième paroi latérale (310), faisant saillie vers un côté supérieur de la deuxième paroi inférieure (320) et liée à la première paroi de séparation (230).

2. Climatiseur selon la revendication 1, dans lequel une portion courbée (231) est formée à une des première et deuxième parois de séparation (230, 330) pour couvrir une surface supérieure (331) de l'autre paroi de séparation.

3. Climatiseur selon la revendication 2, dans lequel une longueur (L) de la portion courbée (231) est formée pour être plus grande qu'une somme des épaisseurs des première et deuxième parois de séparation (230, 330).

4. Climatiseur selon la revendication 1, dans lequel les extrémités supérieures (232, 332) des première et deuxième parois de séparation (230, 330) sont en contact l'une avec l'autre et sont courbées vers le passage de sous-drainage (230), ou bien une extrémité supérieure (232a) de la première paroi de séparation (230) est formée pour faire saillie davantage vers le haut qu'une extrémité supérieure (332a) de la deuxième paroi de séparation (330).

5. Climatiseur selon la revendication 1, dans lequel l'orifice d'évacuation de condensat (600) est formé en rendant concave vers l'intérieur une partie d'une portion de jonction de la surface inférieure du premier ou du deuxième boîtier (1000a, 1000b).

6. Climatiseur selon la revendication 5, dans lequel l'orifice d'évacuation de condensat est réalisé au pluriel (600, 600a, 600b) le long de la portion de jonction (110a, 110b) de la surface inférieure du premier ou deuxième boîtier de manière à évacuer en douceur le condensat même lorsque le boîtier de conditionnement d'air (1000) est incliné durant le fonctionnement d'un véhicule.

7. Climatiseur selon la revendication 5, dans lequel une portion centrale de l'orifice d'évacuation de condensat (500) est espacée d'une distance prédéterminée (D) de la surface liée (233) des première et deuxième parois de séparation (230, 330) vers le passage de drainage principal (200).

8. Climatiseur selon la revendication 1, dans lequel les passages de drainage principal et de sous-drainage (200, 300) sont inclinés vers le bas vers le premier et le deuxième passage d'évacuation de condensat (400, 500).

9. Climatiseur selon la revendication 8, dans lequel les premier et deuxième passages d'évacuation de condensat (400, 500) sont réalisés comme des corps semi-divisés de manière à former un seul tuyau de drainage après qu'ils ont été couplés l'un à l'autre.

10. Climatiseur selon la revendication 8, dans lequel une séparation (410, 510) est formée à la portion de jonction des premier et deuxième passages d'évacuation de condensat (400, 500) de manière à séparer chacun des passages de drainage principal et de sous-drainage (200, 300).

11. Climatiseur selon la revendication 1, dans lequel une première rainure (221) est formée à un côté inférieur d'une des première ou deuxième parois inférieures (220, 320), et une première saillie (321) qui est insérée dans la première rainure (221) est également formée à un côté inférieur de l'autre paroi inférieure.

12. Climatiseur selon la revendication 11, dans lequel des deuxième et troisième rainures (120a, 130a) sont formées à la surface inférieure (100a, 100b) d'un des premier et deuxième boîtiers (1000a, 1000b), et des deuxième et troisième saillies (120b, 130b) qui sont respectivement insérées dans les deuxième et troisième rainures sont formées à la surface inférieure de l'autre boîtier.
